# EUROPÄISCHE PATENTSCHRIFT

(11) **EP 0 739 672 B1**
(45) Veröffentlichungstag und Bekanntmachung des Hinweises auf die Patenterteilung: **29.09.1999**
(21) Anmeldenummer: 96104857.6
(22) Anmeldetag: 27.03.1996
(51) Int. Cl.: B23B 31/16, B25B 1/24

(54) **Spannvorrichtung zum umfangsseitigen Spannen von Werkstücken mit beliebiger Umfangskontur**
Clamping device to clamp workpiece with a non-regular surface
Dispositif de serrage à serrer des pièces à travailler avec une surface non-réguliere

(30) Priorität: 29.04.1995 DE 19515894; 24.10.1995 DE 19539488
(43) Veröffentlichungstag der Anmeldung: 30.10.1996
(73) Patentinhaber: Götz GmbH, 71636 Ludwigsburg (DE)
(72) Erfinder: Püttmer, Hermann, 71537 Kirchberg/Murr (DE); Abraham, Peter, 74360 Ilsfeld (DE)
(74) Vertreter: Vetter, Hans, Dipl.-Phys. Dr.

(56) Entgegenhaltungen:
- EP-A- 0 418 931
- EP-A- 0 463 453
- US-A- 5 407 185
- PATENT ABSTRACTS OF JAPAN vol. 012, no. 466 (M-772), 7.Dezember 1988 & JP 63 191555 A (TOYODA MACH WORKS LTD), 9.August 1988,

## Beschreibung

Die Erfindung betrifft eine Spannvorrichtung zum umfangsseitigen Spannen von Werkstücken mit beliebiger Umfangskontur, mit zwei einander gegenüberliegend auf einem Grundkörper angeordneten Formspannbacken, deren Spannflächen jeweils durch eine Vielzahl von unabhängig voneinander gegen das zu spannende Werkstück fluidisch verschiebbaren und in der Spannstellung arretierbaren Stößeln gebildet werden.

Eine derartige aus der DE-A-42 39 180 bekannte Spannvorrichtung dient zum Spannen von Werkstücken mit beliebiger Umfangskontur beispielsweise auch an Bohr- und Fräsmaschinen, wobei die Werkstücke schnell und einfach gespannt und gelöst werden können. Ein besonderes Problem stellt jedoch beispielsweise die Fertigung von Turbinenschaufeln oder ähnlichen Formteilen dar, bei denen sowohl ein mittlerer Bereich mit komplizierter Umfangskontur, wie auch beidseitige Verankerungselemente hergestellt werden müssen. Bei der Bearbeitung muß dabei das Werkstück exakt um eine definierte Längsachse gedreht und in verschiedenen Winkelpositionen arretiert werden können, was mit der bekannten Spannvorrichtung nicht ohne weiteres möglich ist.

Eine Aufgabe der vorliegenden Erfindung besteht daher darin, die bekannte Spannvorrichtung so zu verbessern, daß Werkstücke mit komplizierter Umfangskontur schnell und sicher gespannt und im gespannten Zustand um eine vorgegebene Längsachse gedreht werden können.

Diese Aufgabe wird erfindungsgemäß dadurch gelöst, daß der Grundkörper in einer Haltevorrichtung um eine senkrecht zur Spannrichtung gerichtete Achse drehbar gelagert ist und ein Anschlußstück zur fluidischen Steuerung des fluidischen Antriebs wenigstens der Stößel besitzt, und daß ein mit fluidischen Leitungen verbundenes Gegenanschlußstück gegen das Anschlußstück verschiebbar und im nicht bewegten Zustand des Grundkörpers in einer bestimmten Winkelstellung an dieses ankoppelbar ist, wobei der Grundkörper Ventilmittel zur Fixierung der Positionen der Stößel im gespannten Zustand nach dem Abkoppeln des Gegenanschlußstücks besitzt.

Die bekannte Spannvorrichtung kann in vorteilhafter Weise so an ein drehbar gespanntes Werkstück herangefahren werden, daß dessen Drehachse mit der Drehachse des Grundkörpers übereinstimmt. In dieser Position werden die Stößel der Formspannbakken betätigt, so daß diese einen Bereich des Werkstücks mit komplizierter Umfangskontur, beispielsweise die Schaufelkontur einer Turbinenschaufel spannen. Nach dem Abkoppeln des Gegenanschlußstücks bleiben die Stößel im gespannten Zustand, so daß der Grundkörper wieder frei drehbar ist und eine zusätzliche Drehlagerung für das zu bearbeitende Werkstück bildet. Zum Lösen und erneuten Spannen des Werkstücks oder eines anderen Werkstücks braucht lediglich das Gegenanschlußstück zur entsprechenden Betätigung der die Spannflächen bildenden Stößel angefahren zu werden, um die entsprechende fluidische Betätigung zu bewirken. Da sich die Spannflächen durch die unabhängig voneinander bewegbaren Stößel schnell und automatisch an die jeweilige Kontur des Werkstücks anpassen und die Spannvorrichtung zuvor so positioniert wird, daß die Drehachse des Grundkörpers mit der des Werkstücks übereinstimmt, können Wechsel zwischen Spannen und Lösen sehr schnell, sicher und exakt durchgeführt werden.

Durch die in den Unteransprüchen aufgeführten Maßnahmen sind vorteilhafte Weiterbildungen und Verbesserungen der im Anspruch 1 angegebenen Spannvorrichtung möglich.

In einer vorteilhaften konstruktiven Ausgestaltung ist der Grundkörper kreisscheibenartig ausgebildet und umfangsseitig gelagert, wobei die umfangsseitige Lagerung im Grundkörper vorzugsweise eine Vielzahl von Rollenlagern enthält, die an der Umfangsfläche des Grundkörpers anliegen können.

Zur Drehung des Grundkörpers ist zweckmäßigerweise ein Antriebsmotor vorgesehen, wobei der an der Haltevorrichtung fixierte Antriebsmotor insbesondere über wenigstens ein Antriebszahnrad in einen umfangsseitigen bzw. im umfangsseitigen Bereich angeordneten Zahnkranz am Grundkörper eingreift. Hierdurch ist eine exakte Winkelpositionierung des Grundkörpers und damit des gespannten Werkstücks möglich.

Um die Spannvorrichtung seitlich über ein bereits voreingespanntes Werkstück schieben zu können, besitzt der Grundkörper zweckmäßigerweise eine sich von einer axial durchgehenden von den beiden Formspannbacken seitlich begrenzten Einspannöffnung aus seitlich bis zum Außenumfang erstreckende durchgehende Ausnehmung, die sich auch durch die Haltevorrichtung erstreckt. Bei einer seitlichen Positionierbewegung der Spannvorrichtung kann dadurch das voreingespannte Werkstück durch die Ausnehmung bis zur Einspannöffnung zwischen den Formspannbacken gelangen, um dann gespannt zu werden. Da der Grundkörper somit auch eine Unterbrechung im Zahnkranz besitzt, sind in vorteilhafter Weise zwei Antriebszahnräder vorgesehen, deren Abstand wenigstens der Breite der Ausnehmung entspricht, so daß ein kontinuierlicher Antrieb gewährleistet ist.

In einer vorteilhaften alternativen konstruktiven Ausgestaltung sind der Grundkörper und die Haltevorrichtung jeweils zweiteilig ausgebildet, wobei die Teilstücke zum Ein- und Ausbringen des zu spannenden Werkstücks auseinanderschwenkbar ausgebildet sind. Die Haltevorrichtung besteht dabei zweckmässigerweise aus einem ersten an einer Führungseinrichtung geführten Teilstück und einem zweiten, über ein Schwenkgelenk schwenkbar mit dem ersten Teilstück verbundenen zweiten Teilstück, wobei beim Schwenkvorgang ein erstes Teilstück des Grundkörpers im ersten Teilstück der Haltevorrichtung verbleibt und ein zweites Teilstück des Grundkörpers im zweiten Teilstück der Haltevorrichtung mitgeschwenkt wird. Durch eine entsprechend große Schwenkbewegung können auch größere Werkstücke leicht zwischen die Formspannbacken gebracht werden.

Die beiden Teilstücke des Grundkörpers bilden zusammen eine geschlossene Kreisscheibe, die einfach gelagert und durch ein einziges Antriebsrad angetrieben werden kann.

Zum automatischen bzw. gesteuerten Verschwenken seiner Teilstücke besitzt die Haltevorrichtung vorzugsweise ein insbesondere fluidisch betätigbares Stellglied.

Um auch bei der Rotation des Grundkörpers in der Haltevorrichtung eine sichere und stabile Anordnung zu erzielen, ist eine die beiden Teilstücke der Haltevorrichtung im geschlossenen Zustand verriegelnde Verriegelungsvorrichtung vorgesehen, die vorzugsweise fluidisch arbeitet bzw. gesteuert wird.

Das Gegenanschlußstück ist zur Ankopplung an das Anschlußstück vorzugsweise fluidisch verschiebbar ausgebildet. Hierdurch ist eine schnelle Ankopplung und Abkopplung möglich.

Um die Hubbewegung der Stößel relativ klein auslegen zu können und um dennoch Werkstücke unterschiedlicher Größe spannen zu können, sind die beiden Formspannbacken in vorteilhafter Weise auf fluidisch gegeneinander am Grundkörper verschiebbaren Schlitten angeordnet. Dabei wird eine noch größere Variabilität dadurch erreicht, daß die Formspannbacken fluidisch an den Schlitten ankoppelbar und/oder verriegelbar sind, so daß verschiedene, alternativ auf dem Schlitten fixierbare Formspannbacken vorgesehen sein können und beispielsweise aus einem Magazin entnehmbar sind.

Zur festen Positionierung des Grundkörpers in verschiedenen Winkelpositionen eignet sich wenigstens eine fluidische Feststellbremse, die insbesondere als Backenbremse am Außenumfang des Grundkörpers ausgebildet ist.

Zur Positionierung der Haltevorrichtung relativ zum voreingespannten Werkzeug weist diese zweckmäßigerweise eine Antriebsvorrichtung zur axialen und/oder quer zur axialen Richtung horizontalen Verschiebung an einer Führungseinrichtung auf.

Die Mittel zur Fixierung der Stößel im gespannten Zustand sind vorzugsweise als fluidisch betätigbare Absperrventile ausgebildet, wobei vorzugsweise Rückschlagventile zur Aufrechterhaltung der Stößelpositionen nach dem Abkoppeln des Gegenanschlußstücks vorgesehen sind.

Ein noch besseres Spannen des Werkstücks durch die Stößel bei gleichzeitigem Schutz vor einer Beschädigung des Werkstücks an den Kontaktstellen durch die Stößel wird dadurch erreicht, daß jeder Formspannbacken ein sich über die Stößel hinweg erstreckendes Spannband besitzt, das vorzugsweise durch Federkraft an den Stößeln anliegt.

Als fluidische Steuerung eignet sich vorzugsweise eine hydrauliche Steuerung.

Zwei Ausführungsbeispiele der Erfindung sind in der Zeichnung dargestellt und in der nachfolgenden Beschreibung näher erläutert. Es zeigen:
- Figur 1: eine Seitenansicht einer Spannvorrichtung bei auf einem der beiden Schlitten aufgesetztem Formspannbacken gemäß dem ersten Ausführungsbeispiel,
- Figur 2: eine Stirnansicht dieser Spannvorrichtung mit der die Versorgungsanschlüsse aufweisenden Rückseite des Gegenanschlußstücks,
- Figur 3: eine Ansicht eines Formspannbackens von unten, zum Teil im aufgeschnittenen Zustand,
- Figur 4: eine Ansicht des in Figur 3 dargestellten Formspannbackens auf der Stößelseite,
- Figur 5: eine als Backenbremse ausgebildete Feststellbremse für den Grundkörper,
- Figur 6: eine hydraulische Verriegelungsvorrichtung für einen Haltezapfen des Formspannbackens und
- Figur 7: eine Seitenansicht einer Spannvorrichtung mit auseinanderschwenkbarer Haltevorrichtung gemäß dem zweiten Ausführungsbeispiel.

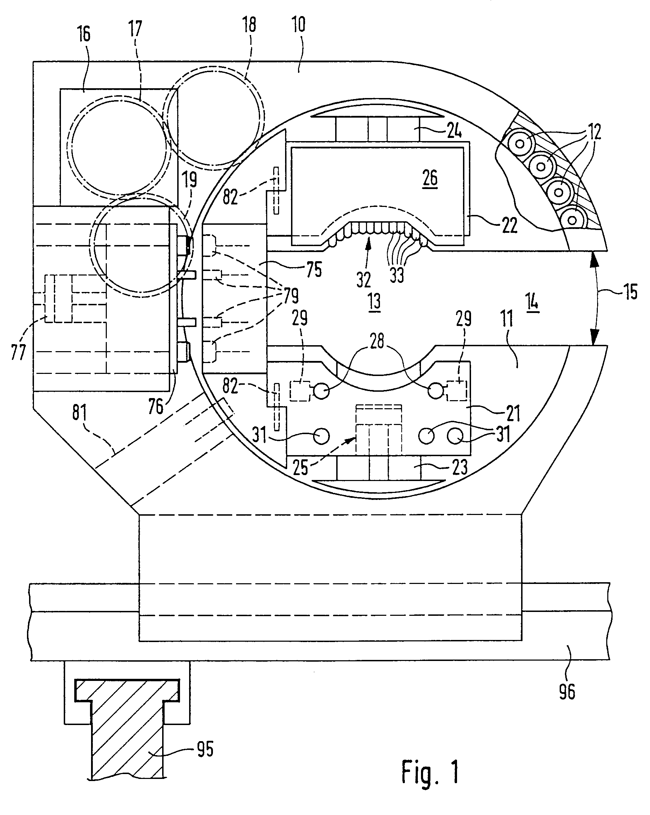

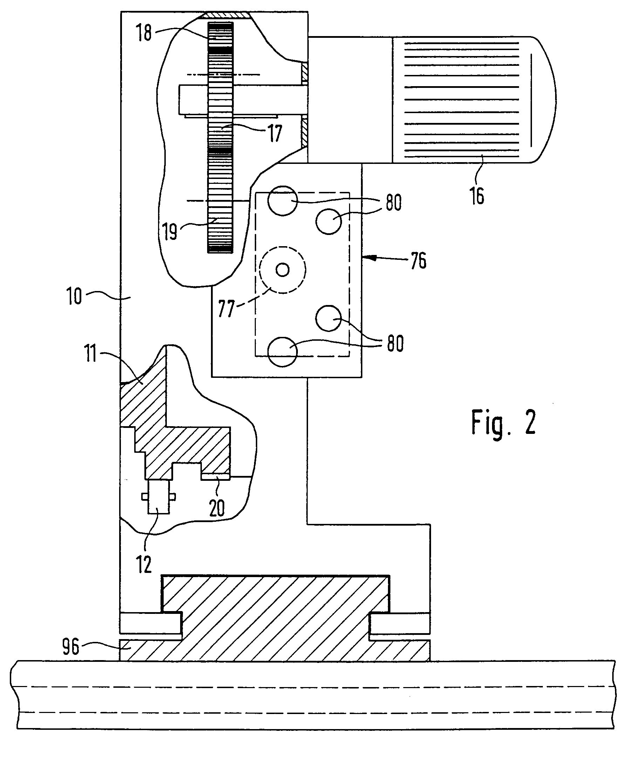

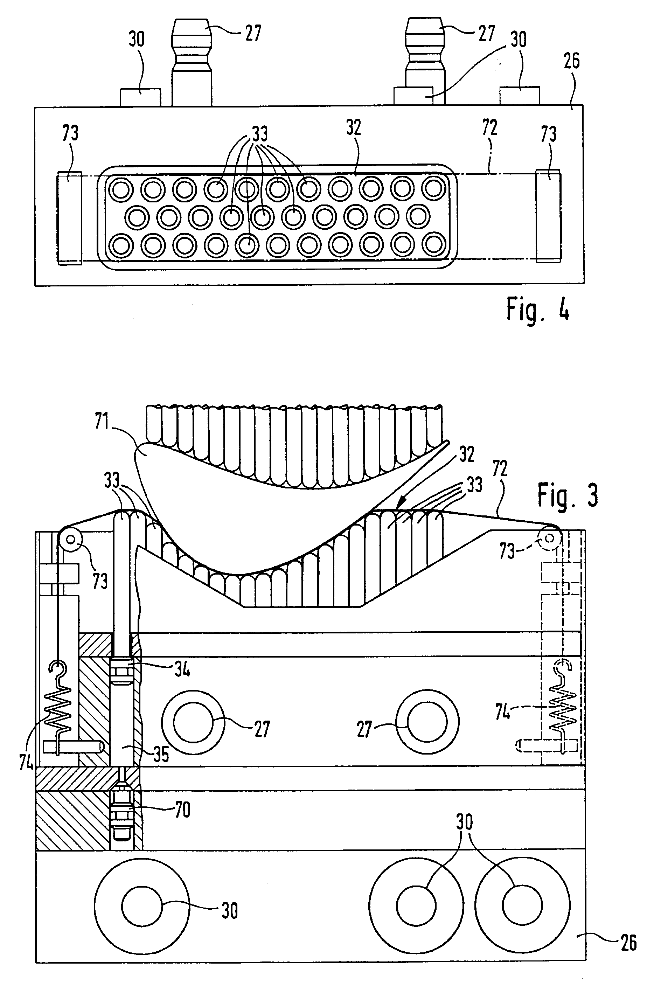

Die in den Figuren 1 und 2 dargestellte Spannvorrichtung besteht im wesentlichen aus einer Haltevorrichtung 10, in der ein kreisscheibenartiger Grundkörper 11 drehbar gelagert ist. Der Grundkörper 11 besitzt in seinem Zentrum eine axial durchgehende Einspannöffnung 13, in der ein einzuspannendes Werkstück positioniert wird. Von dieser Einspannöffnung 13 aus erstreckt sich eine schlitzartige, ebenfalls durchgehende Ausnehmung 14 bis zum Rand des Grundkörpers 11, so daß der Grundkörper 11 seitlich über ein zu spannendes Werkstück geschoben werden kann, das dabei durch die Ausnehmung 14 hindurchgeführt wird. Die Ausnehmung 14 setzt sich auch an der gegenüberliegenden Seite der Einspannöffnung 13 noch etwas fort.

Die ringartig den Grundkörper 11 umgreifende Haltevorrichtung 10 weist eine Unterbrechung 15 auf, deren Breite der der Ausnehmung 14 entspricht und die in der in Figur 1 dargestellten Winkelposition des Grundkörpers 11 mit der horizontal verlaufenden Ausnehmung 14 fluchtet. Die Unterbrechung 15 unterbricht selbstverständlich auch die Reihe der Lagerrollen 12.

Ein seitlich an der Haltevorrichtung 10 angeflanschter Antriebsmotor 16 treibt über ein erstes Zahnrad 17 zwei Antriebszahnräder 18, 19 für den Grundkörper 11 an. Diese greifen hierzu in einen Zahnkranz 20 des Grundkörpers 11 ein, der neben der Lauffläche für die Lagerrollen 12 angeordnet und beispielsweise an den Grundkörper 11 in nicht dargestellter Weise angeschraubt sein kann. Die Angriffsstellen der beiden Antriebszahnräder 18, 19 am Zahnkranz 20 weisen einen Abstand voneinander auf, der größer als die Breite der Ausnehmung 14 ist, so daß beim Passieren dieser Ausnehmung 14 an den Antriebszahnrädern 18, 19 immer wenigstens ein Antriebszahnrad in Eingriff mit dem Zahnkranz 20 steht, der notwendigerweise im Bereich der Ausnehmung 14 unterbrochen ist.

Zwei Schlitten 21, 22 sind gegenüberliegend an der Einspannöffnung 13 angeordnet und an Führungsbahnen 23, 24 gegeneinander verschiebbar geführt. Die Verschiebung erfolgt mittels Hydraulikzylindern 25 in den Schlitten 21, 22, von denen nur einer schematisch dargestellt ist.

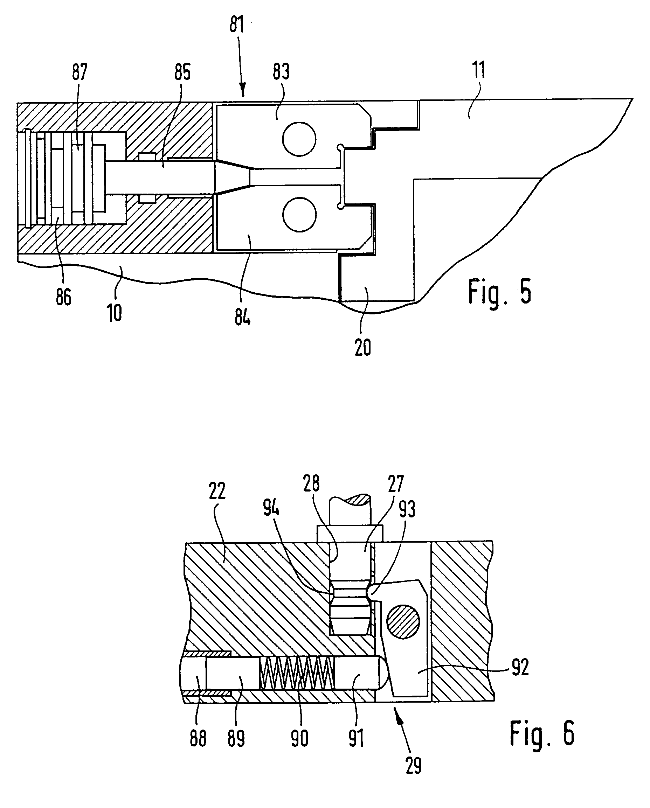

Auf die Schlitten 21, 22 können nun Formspannbacken 26 aufgesteckt und fixiert werden, wobei in Figur 1 nur ein Formspannbacken 26 auf den in der Darstellung oberen Schlitten 22 aufgesteckt ist. Dieser Formspannbacken ist in den Figuren 3 und 4 näher dargestellt und prinzipiell aus dem eingangs angegebenen Stand der Technik bekannt. Beim Aufstecken des Formspannbackens 26 greifen zwei Haltebolzen 27 in zwei Halteöffnungen 28 ein und werden jeweils mittels einer Verriegelungseinrichtung 29 verriegelt. Eine mögliche Ausführung einer solchen Verriegelungseinrichtung 29 ist in Figur 6 detaillierter dargestellt. Weiterhin greifen hydraulische Anschlüsse 30 am Formspannbacken 26 dichtend in entsprechende Anschlußöffnungen 31 des Schlittens 21 bzw. 22 ein. Die Zahl der Haltebolzen 27 ist je nach Erfordernis frei wählbar, und die Zahl der hydraulischen Anschlüsse 30 bzw. Anschlußöffnungen 31 richtet sich nach dem jeweiligen Bedarf.

Jeder der beiden Formspannbacken 26 besitzt eine Spannfläche 32, die aus einer Vielzahl von unabhängig voneinander um eine bestimmt Hubstrecke hydraulisch verschiebbaren Stößeln 33 (Spannstößeln) besteht. In Figur 3 ist einer der Stößel 33 detaillierter dargestellt, d. h. der entsprechende Bereich des Formspannbackens 26 ist aufgeschnitten dargestellt. Der innere Endbereich jedes Stößels 33 ist mit einem Stößelkolben 34 versehen, der hydraulisch in einem Stößelzylinder 35 verschiebbar angeordnet ist. Der Zylinderraum des Stößelzylinders 35 ist dabei durch ein hydraulisch betätigbares Absperrventil 70 verschließbar. Die erforderlichen Hydraulikverteiler und Hydraulikleitungen zu den hydraulischen Anschlüssen 30 sind zur Vereinfachung nicht dargestellt.

Zum Ausfahren der Stößel 33 werden die Absperrventile 70 hydraulisch in die geöffnete Stellung bewegt, so daß Hydraulikflüssigkeit in die Stößelzylinder 35 eindringen und die Stößel 33 nach außen verschieben kann. Ihre Bewegung wird durch den Anschlag an einem einzuspannenden Werkstück 71 begrenzt, das gemäß Figur 3 eine Turbinenschaufel ist. Nicht mit dem Werkstück 71 in Kontakt gelangende Stößel 33 fahren bis in ihre Endstellung aus. Nach dem Erreichen der Spannstellung werden die Absperrventile 70 in ihre Sperrstellung gebracht, so daß die Stößel 33 in der Spannposition fixiert werden. Nicht dargestellte Rückschlagventile sorgen dafür, daß die Absperrventile 70 auch bei Wegfall der äußeren Druckversorgung in der geschlossenen Stellung bleiben. Die Wirkungsweise der Formspannbacken 26 ist im eingangs angegebenen Stand der Technik noch detaillierter dargestellt.

Über die Spannfläche 32 erstreckt sich ein Spannband 72, das beispielsweise aus einer Metallfolie besteht. Dieses Spannband verläuft in der Längsrichtung über die Spannfläche 32 und wird dann über Umlenkwalzen 73 zu beiden Seiten der Spannfläche 32 ins Innere des Formspannbackens 26 umgelenkt. Die beiden Enden des Spannbands 72 sind in Spannfedern 74 eingehängt, die im Innern des Formspannbackens 26 befestigt sind. Hierdurch ist das Spannband 72 unabhängig von der jeweiligen Position der einzelnen Stößel 33 immer gespannt und verläuft zwischen dem einzuspannenden Werkstück 71 und den Enden der Stößel 33.

Am Ende der schlitzförmigen Ausnehmung 14 ist symmetrisch zu den Schlitten 21, 22 ein hydraulisches Anschlußstück 75 am Grundkörper 11 fixiert. In der in Figur 1 dargestellten Grund- bzw. Ruhestellung des Grundkörpers 11 steht diesem Anschlußstück 75 ein Gegenanschlußstück 76 gegenüber, das hydraulisch verschiebbar an der Haltevorrichtung 10 angeordnet ist. Hierzu dient ein Hydraulikzylinder 77 im Innern des Gegenanschlußstücks 76. Bei einer Betätigung des Hydraulikzylinders 77 wird das Gegenanschlußstück 76 zum Anschlußstück 75 hin bewegt, wobei hydraulische Anschlüsse 78 am Gegenanschlußstück 76 in entsprechende Anschlußöffnungen 79 des Anschlußstücks 75 dichtend einfahren bzw. ankoppeln. Die hydraulischen Anschlüsse 78 sind dabei über nicht dargestellte Kanäle im Innern des Gegenanschlußstücks 76 mit Anschlußöffnungen 80 an der Rückseite des Gegenanschlußstücks 76 verbunden. Diese Anschlußöffnungen 80 sind mit nicht dargestellten Hydraulikleitungen (Steuer-und Versorgungsleitungen) verbindbar.

Zum Spannen eines Werkstücks wird dieses in der Einspannöffnung 13 positioniert. Dann wird das Gegenanschlußstück 76 hydraulisch bewegt und an das Anschlußstück 75 angekoppelt. Der Grundkörper 11 ist dabei durch eine hydraulische Feststellbremse 81 fixiert, die in Figur 5 detaillierter dargestellt ist. Nun werden die Schlitten 21, 22 hydraulisch gegeneinander bewegt, indem entsprechende Druckleitungen über das Gegenanschlußstück 76 mit Druck beaufschlagt werden. Die internen Leitungen, die im Anschlußstück 75 zu den Schlitten 21, 22 führen, sind dabei nicht näher dargestellt. Die Druckverbindung zwischen dem Anschlußstück 75 und den verschiebbaren Schlitten 21, 22 erfolgt dabei beispielsweise über verschiebbare Druckrohre 82, die lediglich schematisch dargestellt sind. Schließlich werden die Stößel 33 betätigt bzw. ausgefahren, bis das Werkstück 71 gemäß Figur 3 zwischen ihnen fixiert ist. Nun wird das Gegenanschlußstück 26 wieder vom Anschlußstück 75 entkoppelt und in die in Figur 1 dargestellte Stellung zurückgefahren. Rückschlagventile oder andere Sperrmittel sorgen dabei dafür, daß die Stößel 33 in ihrer Spannstellung verbleiben. Nun kann der Grundkörper 11 zusammen mit dem eingespannten Werkstück 71 gedreht werden. Dies kann mittels des Antriebsmotors 16 erfolgen, oder bei einer Drehung des Werkstücks 71 wird der Grundkörper 11 mitgedreht.

Zum Lösen des Werkstücks 71 wird der Grundkörper 11 wieder in die in Figur 1 dargestellte Grundposition gebracht und verriegelt, das Gegenanschlußstück 76 an das Anschlußstück 75 angekoppelt und das Lösen des Werkstücks durch Zurückfahren der Stößel 33 und Schlitten 21, 22 bewirkt.

Die in Figur 5 detaillierter dargestellte Feststellbremse 81 besteht im wesentlichen aus zwei schwenkbar gelagerten Bremsbacken 83, 84, die den Grundkörper 11 an dessen Lagerbereich umgreifen. Von der gegenüberliegenden Seite her greift ein konisch zulaufender Auslösebolzen 85 zwischen die Bremsbacken 83, 84 ein. Dieser Auslösebolzen 85 trägt am gegenüberliegenden Endbereich einen in einer hydraulischen Zylinderkammer 86 bewegbaren Kolben 87. Zum Bremsen bzw. Feststellen des Grundkörpers 11 wird die Zylinderkammer 86 mit hydraulischem Druck beaufschlagt, so daß sich der Kolben 87 und damit der Auslösebolzen 85 zum Grundkörper 11 hin bewegt. Durch das konisch zulaufende Ende des Auslösebolzens 85 werden dabei die beiden Bremsbacken 83, 84 an dieser Stelle auseinandergespreizt, so daß sie infolge ihrer Schwenklagerung am gegenüberliegenden aktiven Endbereich den Grundkörper 11 zwischen sich einklemmen und festhalten.

In Figur 6 ist eine der Verriegelungseinrichtungen 29 für einen der Haltebolzen 27 des Formspannbackens 26 im Schlitten 22 detaillierter dargestellt. Beim Aufstecken der Formspannbacken 26 auf die Schlitten 21, 22 greifen die Haltebolzen 27 der Formspannbacken 26 in die Halteöffnungen 28 der Schlitten 21, 22 ein. Zur Verriegelung wird dann ein Hydraulikzylinder 88 mit Druck beaufschlagt, so daß ein Verriegelungskolben 89 über eine Feder 90 einen Verriegelungsbolzen 91 so gegen einen schwenkbar gelagerten Verriegelungshebel 92 schiebt, daß dessen gegenüberliegendes, mit einer Verriegelungsnase 93 versehenes Ende in eine umlaufende Ringnut 94 des Haltebolzens 27 eingreift und diesen dadurch verriegelt. Diese Verriegelung kann durch Zurückfahren des Verriegelungskolbens 89 wieder gelöst werden.

Um beispielsweise eine Turbinenschaufel herzustellen, wie sie in Figur 3 als Werkstück 71 dargestellt ist, wird zunächst an einem entsprechenden Rohling in einem Bearbeitungszentrum ein Halteende fertig bearbeitet. An diesem wird dann der Rohling eingespannt, und die gekrümmten Schaufelflächen werden in bekannter Weise in einem oder mehreren Bearbeitungsvorgängen hergestellt. Da das noch zu bearbeitende gegenüberliegende Halteende relativ weit vom eingespannten Halteende entfernt ist, würden sich bei dessen Bearbeitung ohne weitere Maßnahmen Probleme ergeben. Diese werden durch die erfindungsgemäße Spannvorrichtung gelöst. Die Haltevorrichtung 10 wird zunächst in Längsrichtung soweit verschoben, daß sie neben den bearbeiteten Schaufelflächen positioniert ist. Hierzu dienen Längsführungen 95, von denen zur Vereinfachung nur eine dargestellt ist. Ebenfalls nicht dargestellt ist der motorische Antrieb zur Bewegung der Haltevorrichtung 10 entlang dieser Längsführungen 95. Nun wird die Haltevorrichtung 10 an Querführungen 96 quer zur Längsrichtung der teilbearbeiteten Turbinenschaufel bewegt, wobei diese durch die Ausnehmung 14 hindurch bis zur Einspannöffnung 13 gelangt. Der motorische Antrieb für die Querführungen 96 ist wiederum zur Vereinfachung nicht dargestellt. Die Haltevorrichtung 10 wird also so positioniert, daß die Längsachse der teilbearbeiteten Turbinenschaufel, also die Längsachse des bereits bearbeiteten Halteendes dieser Turbinenschaufel mit der Drehachse des Grundkörpers 11 übereinstimmt. Eventuell hierfür benötigte Stellvorrichtungen zur Höhenverstellung der Haltevorrichtung 10 müssen selbstverständlich bei Bedarf ebenfalls vorgesehen sein. Nun wird in der bereits beschriebenen Weise die Turbinenschaufel mit Hilfe der Formspannbacken 26 im Grundkörper 11 gespannt. Jetzt kann das noch unbearbeitete Halteende der Turbinenschaufel bearbeitet werden. Hierzu kann die teilbearbeitete Turbinenschaufel mit Hilfe des Antriebsmotors 16 in der erforderlichen Weise gedreht werden, wobei diese Drehung auch über das eingespannte, bereits bearbeitete Halteende der Turbinenschaufel erfolgen kann. Nach der Bearbeitung werden die Formspannbacken 26 in der in Figur 1 dargestellten Winkelstellung des Grundkörpers 11 gelöst und die Haltevorrichtung 10 seitlich von der Turbinenschaufel wegbewegt. Nun kann die nächste Turbinenschaufel eingespannt werden, und der beschriebenen Vorgang wiederholt sich.

Um auch Werkstücke von sehr unterschiedlicher Gestalt einspannen zu können, sind in einem nicht dargestellten Magazin Formspannbacken 26 unterschiedlicher Gestalt untergebracht. Diese können nach Bedarf auf die Schlitten 21, 22 aufgesetzt werden, z. B. mittels eines ebenfalls nicht dargestellten Wechselautomaten.

In einer einfacheren Ausführung kann auch auf die Schlitten 21, 22 verzichtet werden, d. h. die Formspannbacken 26 werden direkt auf den Grundkörper 11 aufgesetzt. Die Spannbewegung wird dann allein durch die Bewegung der Stößel 33 bewirkt.

Zur Fixierung der motorisch entlang der Längsführungen 95 und Querführungen 96 bewegbaren Haltevorrichtung 10 wenigstens in der Arbeitsposition sind in an sich bekannter Weise nicht dargestellte Feststelleinrichtungen vorgesehen, die beispielsweise ebenfalls Hydraulikzylinder aufweisen können.

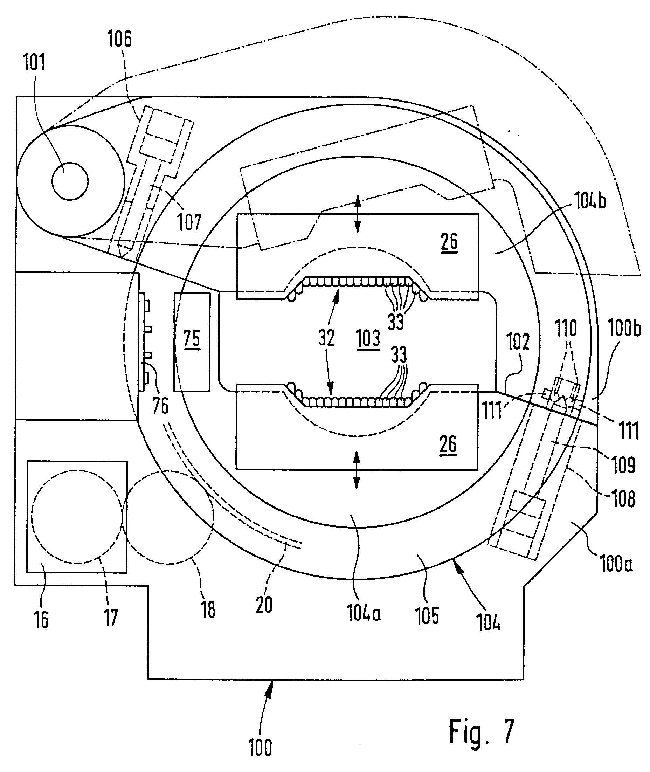

Das in Figur 7 dargestellte zweite Ausführungsbeispiel weist viele Einzelteile und Vorrichtungen auf, die denen des ersten Ausführungsbeispiels entsprechen. Gleiche oder gleichwirkende Bauteile, Baugruppen oder Vorrichtungen sind daher mit denselben Bezugszeichen versehen und nicht nochmals beschrieben.

Gegenüber dem ersten Ausführungsbeispiel besteht beim zweiten Ausführungsbeispiel eine Haltevorrichtung 100 aus zwei Teilstücken 100a, 100b, wobei das Teilstück 100b über ein Schwenkgelenk 101 schwenkbar am Teilstück 100a gelagert ist, während das Teilstück 100a in entsprechender Weise wie die Haltevorrichtung 10 des ersten Ausführungsbeispiels an den in Figur 7 nicht dargestellten Querführungen 96 geführt ist, die wiederum entlang der Längsführungen 95 bewegbar ist. Auch hier können wiederum motorische Stellvorrichtungen vorgesehen sein. Die beiden Teilstücke 100a und 100b der Haltevorrichtung 100 weisen im geschlossenen Zustand zusammen eine Gestalt auf, die im wesentlichen der der Haltevorrichtung 10 des ersten Ausführungsbeispiels entspricht. Eine Trennlinie 102 bzw. Anlagefläche zwischen den beiden Teilstücken 100a, 100b verläuft von dem links oben angeordneten Schwenkgelenk 101 aus schräg nach unten. In dieser Haltevorrichtung ist wie beim ersten Ausführungsbeispiel ein kreisscheibenförmiger Grundkörper 104 drehbar gelagert, der ebenfalls aus zwei Teilstücken 104a, 104b besteht. In der dargestellten Drehposition des Grundkörpers 104 setzt sich die Trennlinie 102 durch diesen Grundkörper 104 hindurch fort und teilt ihn in die beiden Teilstücke 104a, 104b auf. Im mittleren Bereich des Grundkörpers 104 ist wiederum eine axial durchgehende Einspannöffnung 103 zur Aufnahme von einzuspannenden Werkstücken vorgesehen, wobei zu beiden Seiten dieser Einspannöffnung 103 die beiden Formspannbacken 26 angeordnet sind und jedes Teilstück 104a, 104b einen solchen Formspannbacken 26 trägt.

Die Bewegung der Formspannbacken 26 und der Stößel 33 erfolgt gemäß dem ersten Ausführungsbeispiel, d. h. hydraulisch über das Anschlußstück 75 und das gegenüber diesem bewegbare Gegenanschlußstück 76. Während die Hydraulikleitungen vom Anschlußstuck 75 aus in nicht dargestellter Weise durch das Teilstück 104a des Grundkörpers 104 zu dessen Formspannbacken 26 geführt sein können, müssen die Hydraulikzuführungen zum anderen Formspannbacken 26 auf dem anderen Teilstück 104b über die Trennlinie 102 hinweg erfolgen. Dies kann über bewegliche, nicht dargestellte Außenleitungen oder über im Teilstück 104b integrierte Hydraulikleitungen erfolgen, wobei die Hydraulikanschlüsse über die durch die Trennlinie 102 gebildete Trennfläche hinweg gebildet werden, die sich im geschlossenen Zustand der Teilstücke 104a, 104b dichtend aneinanderlegen.

Der Grundkörper 104 weist umfangsseitig einen wiederum aus zwei Teilstücken bestehenden Drehkranz 105 auf, der wie beim ersten Ausführungsbeispiel über Lagerrollen 12 in der Haltevorrichtung 100 drehbar gelagert ist. Die Lagerrollen 12 greifen dabei in nicht dargestellter Weise in den Drehkranz 105 ein, wobei hintergreifende Elemente in oder an diesem Drehkanz 105 verhindern, daß die beiden Teilstücke 104a, 104b des Grundkörpers 104 im geöffneten Zustand aus der Haltevorrichtung 100 herausfallen. Bei diesen hintergreifenden Elementen kann es sich auch um die Lagerrollen 12 selbst handelt. Zum Drehantrieb des Grundkörpers 104 treibt wiederum der mit dem Zahnrad 17 versehene Antriebsmotor 16 über ein Antriebszahnrad 18 den Zahnkranz 20 des Grundkörpers 104 an, der hier im Innern des Drehkranzes 105 oder hinter diesem angeordnet ist. Das zweite Antriebszahnrad 19 kann hier entfallen, da der Grundkörper 104 und damit der Drehkranz 105 jeweils einen geschlossenen Ring bilden.

Zum Positionieren des Grundkörpers 104 in der in Figur 7 dargestellten Drehposition sind zwei nicht dargestellte Feststellbremsen für die beiden Teilstücke 104a, 104b vorgesehen, die im wesentlichen der Feststellbremse 81 des ersten Ausführungsbeispiels entsprechen.

Zum Einlegen eines zu bearbeitenden Werkstücks zwischen die Formspannbacken 26 wird das obere Teilstück 100b der Haltevorrichtung 100 zusammen mit dem oberen Teilstück 104b des Grundkörpers 104 nach oben geschwenkt. In der nach oben geschwenkten Offenposition nimmt das obere Teilstück 100b der Haltevorrichtung 100 dann die in Figur 7 strichpunktiert dargestellte Position ein. Zum automatisch gesteuerten Hochschwenken dient dabei ein hydraulisches Stellglied 106, das lediglich schematisch neben dem Schwenkgelenk 101 dargestellt ist. Ein Stößel 107 dieses im oberen Teilstück 100b der Haltevorrichtung 100 angeordneten hydraulischen Stellglied 106 drückt bei dessen Betätigung auf die durch die Trennlinie 102 gebildete Trennfläche des unteren Teilstücks 100a und drückt dadurch die beiden Teilstücke auseinander. Die Rückstellbewegung kann durch Schwerkraft, durch Federkraft oder ebenfalls hydraulisch erfolgen. Ebenso kann anstelle eines hydraulischen Stellglieds auch ein anderes fluidisches Stellglied oder ein magnetisches oder elektrisches Stellglied treten.

Im geschlossenen Zustand der beiden Teilstücke 100a, 100b der Haltevorrichtung 100 werden diese gegeneinander verriegelt. Hierzu dient eine hydraulische Verriegelungsvorrichtung 108, die am vom Schwenkgelenk 101 entfernten Randbereich der Trennlinie 102 angeordnet ist. Bei dieser Verriegelungsvorrichtung 108 greift ein sich am freien Ende verjüngender, im unteren Teilstück 100a hydraulisch verschiebbar gelagerter Stößel 109 mit einem sich verjüngenden Ende zwischen zwei Verriegelungsglieder 110 ein. Verschiebt sich der Stößel 109 zum oberen Teilstück 100b hin, so werden die Verriegelungsglieder 110 auseinandergedrückt und greifen in Rastöffnungen 111 des oberen Teilstücks 100b zur Verriegelung ein. Auch hier können selbstverständlich andere bekannte Konstruktionen von Verriegelungsvorrichtungen vorgesehen sein.

## Patentansprüche

1. Spannvorrichtung zum umfangsseitigen Spannen von Werkstücken mit beliebiger Umfangskontur, mit zwei einander gegenüberliegend auf einem Grundkörper (11,104) angeordneten Formspannbacken (26), deren Spannflächen (32) jeweils durch eine Vielzahl von unabhängig voneinander gegen das zu spannende Werkstück (71) fluidisch verschiebbaren und in der Spannstellung arretierbaren Stößeln (33) gebildet werden, dadurch gekennzeichnet, daß der Grundkörper (11, 104) in einer Haltevorrichtung (10, 100) um eine senkrecht zur Spannrichtung gerichtete Achse drehbar gelagert ist und ein Anschlußstück (75) zur fluidischen, insbesondere hydraulischen Steuerung des fluidischen Antriebs wenigstens der Stößel (33) besitzt, und daß ein mit fluidischen Leitungen verbundenes Gegenanschlußstück (76) gegen das Anschlußstück (75) verschiebbar und im nicht bewegten Zustand des Grundkörpers (11, 104) in einer bestimmten Winkelstellung an dieses ankoppelbar ist, wobei der Grundkörper Ventilmittel (70) zur Fixierung der Positionen der Stößel (33) im gespannten Zustand nach dem Abkoppeln des Gegenanschlußstücks (76) besitzt.

2. Spannvorrichtung nach Anspruch 1, dadurch gekennzeichnet, daß der Grundkörper (11, 104) kreisscheibenartig ausgebildet und umfangsseitig gelagert ist, wobei die umfangsseitige Lagerung des Grundkörpers (11, 104) vorzugsweise eine Vielzahl von Lagerrollen (12) enthält.

3. Spannvorrichtung nach Anspruch 1 oder 2, dadurch gekennzeichnet, daß ein Antriebsmotor (16) für die Drehung des Grundkörpers (11, 104) vorgesehen ist.

4. Spannvorrichtung nach Anspruch 3, dadurch gekennzeichnet, daß der an der Haltevorrichtung (10, 100) fixierte Antriebsmotor über wenigstens ein Antriebszahnrad (18, 19) in einen Zahnkranz (20) am Grundkörper (11, 104) eingreift, der an dessen Umfangsbereich angeordnet ist, wobei vorzugsweise zwei in den Zahnkranz (20) eingreifende Antriebszahnräder (18, 19) vorgesehen sind, deren Abstand mindestens der Breite der Ausnehmung (14) entspricht.

5. Spannvorrichtung nach einem der vorhergehenden Ansprüche, dadurch gekennzeichnet, daß der Grundkörper (11) von einer axial durchgehenden, im wesentlichen durch die beiden Formspannbacken (26) seitlich begrenzten Einspannöffnung (13) aus eine sich seitlich bis zum Außenumfang erstreckende, durchgehende Ausnehmung (14) besitzt, die sich auch durch die Haltevorrichtung (10) erstreckt.

6. Spannvorrichtung nach einem der Ansprüche 1 bis 4, dadurch gekennzeichnet, daß der Grundkörper (104) und die Haltevorrichtung (100) jeweils zweiteilig ausgebildet sind, wobei die Teilstücke (104a, 104b bzw. 100a, 100b) zum Ein- und Ausbringen des zu spannenden Werkstücks auseinanderschwenkbar ausgebildet sind und die beiden Teilstücke (104a, 104b) des Grundkörpers (104) insbesondere zusammen eine geschlossene Kreisscheibe bilden.

7. Spannvorrichtung nach Anspruch 6, dadurch gekennzeichnet, daß die Kreisscheibe mit einem insbesondere als Lagerring ausgebildeten Drehkranz (105) versehen ist, der ebenfalls zweistückig ausgebildet ist.

8. Spannvorrichtung nach Anspruch 6 oder 7, dadurch gekennzeichnet, daß die Haltevorrichtung (100) aus einem ersten, an einer Führungseinrichtung (95, 96) geführten Teilstück (100a) und einem zweiten über ein Schwenkgelenk (101) schwenkbar mit dem ersten Teilstück (100a) verbundenen zweiten Teilstück (100b) besteht, wobei beim Schwenkvorgang ein erstes Teilstück (104a) des Grundkörpers (104) im ersten Teilstück (100a) der Haltevorrichtung (100) verbleibt und ein zweites Teilstück (104b) des Grundkörpers (104) im zweiten Teilstück (100b) der Haltevorrichtung (100) mitgeschwenkt wird.

9. Spannvorrichtung nach einem der Ansprüche 6 bis 8, dadurch gekennzeichnet, daß die Haltevorrichtung (100) zum Verschwenken seiner Teilstücke (100a, 100b) relativ zueinander ein insbesondere fluidisches Stellglied (106) aufweist.

10. Spannvorrichtung nach einem der Ansprüche 6 bis 9, dadurch gekennzeichnet, daß eine die beiden Teilstücke (100a, 100b) der Haltevorrichtung (100) im geschlossenen Zustand verriegelnde, vorzugsweise fluidisch gesteuerte Verriegelungsvorrichtung (108) vorgesehen ist.

11. Spannvorrichtung nach einem der vorhergehenden Ansprüche, dadurch gekennzeichnet, daß das Gegenanschlußstück (76) fluidisch verschiebbar ausgebildet ist.

12. Spannvorrichtung nach einem der vorhergehenden Ansprüche, dadurch gekennzeichnet, daß die beiden Formspannbacken (26) auf fluidisch gegeneinander am Grundkörper (11, 104) verschiebbaren Schlitten (21, 22) angeordnet und insbesondere fluidisch an den Schlitten (21, 22) ankoppelbar und/oder verriegelbar sind.

13. Spannvorrichtung nach Anspruch 12, dadurch gekennzeichnet, daß verschiedene, alternativ auf den Schlitten (21, 22) fixierbare Formspannbacken (26) vorgesehen sind.

14. Spannvorrichtung nach einem der vorhergehenden Ansprüche, dadurch gekennzeichnet, daß wenigstens eine fluidische Feststellbremse (81) für den Grundkörper (11, 104) vorgesehen ist, die vorzugsweise als Backenbremse am Außenumfang des Grundkörpers (11, 104) ausgebildet ist.

15. Spannvorrichtung nach einem der vorhergehenden Ansprüche, dadurch gekennzeichnet, daß die Haltevorrichtung (10, 100) eine Antriebsvorrichtung zur axialen und/oder quer zur axialen Richtung horizontalen Verschiebung an einer Führungseinrichtung (95, 96) aufweist.

16. Spannvorrichtung nach einem der vorhergehenden Ansprüche, dadurch gekennzeichnet, daß die Ventilmittel (70) zur Fixierung der Stößel (33) im gesperrten Zustand als fluidisch betätigbare Absperrventile ausgebildet sind, wobei vorzugsweise Rückschlagventile zur Aufrechterhaltung der Stößelposition nach dem Abkoppeln des Gegenanschlußstücks (76) vorgesehen sind.

17. Spannvorrichtung nach einem der vorhergehenden Ansprüche, dadurch gekennzeichnet, daß jeder Formspannbacken (26) ein die Stößeln (33) überdeckendes insbesondere durch Federkraft an den Stößeln (33) anliegendes Spannband (72) besitzt.

## Claims

1. Clamping device for the peripheral-side clamping of workpieces of any desired peripheral contour, with two shaped clamping jaws (26) arranged opposite one another on a body (11, 104) and with clamping surfaces (32) formed by a multiplicity of rams (33), capable of independent movement by fluidic means against the workpiece (71) to be clamped and lockable in the clamping position, characterized in that the body (11, 104) is mounted, rotatable around an axis at right-angles to the direction of clamping, in a holding device (10, 100), and has a connection element (75) for fluidic - in particular hydraulic - control of the fluidic drive of at least the rams (33), and that a mating connection element (76) linked to fluidic lines can be moved against the connection element (75) and, when the body (11, 104) is not moving, can be coupled to the latter in a certain angular position, wherein the body has valve means (70) for fixing the positions of the rams (33) in the clamped state after uncoupling of the mating connection element (76).

2. Clamping device according to claim 1, characterized in that the body (11, 104) has a circular-disc shape and is supported on its periphery, while the peripheral-side support of the body (11, 104) preferably contains a multiplicity of bearing rollers (12).

3. Clamping device according to claim 1 or 2, characterized in that a drive motor (16) is provided for rotation of the body (11, 104).

4. Clamping device according to claim 3, characterized in that the drive motor fixed to the holding device (10, 100) engages via one or more driving gears (18, 19) with a gear rim (20) located on the periphery of the body (11, 104), wherein preferably two driving gears (18, 19) engaging in the gear rim (20) are provided, with the distance between them corresponding at least to the width of the recess (14).

5. Clamping device according to any of the preceding claims, characterized in that the body (11) has a continuous recess (14), extending sideways from an axially continuous clamping opening (13) and bounded at the sides substantially by the two shaped clamping jaws (26), which also extends through the holding device (10).

6. Clamping device according to any of claims 1 to 4, characterized in that the body (104) and the holding device (100) are each of two-piece design, wherein the sections (104a, 104b and 100a, 100b respectively) for insertion and removal of the workpiece to be clamped are designed to swivel apart, and the two sections (104a, 104b) of the body (104) form a closed circular disc, in particular together.

7. Clamping device according to claim 6, characterized in that the circular disc is provided with a slewing ring (105), in particular in the form of a bearing ring, and similarly of two-part design.

8. Clamping device according to claim 6 or 7, characterized in that the holding device (100) is comprised of a first section (100a) guided on a guide element (95, 96) and a second section (100b) connected to the first section (100a) so as to be capable of swivelling via a swivel hinge (101), wherein during swivelling a first section (104a) of the body (104) remains in the first section (100a) of the holding device (100), and a second section (104b) of the body (104) is swivelled together with the second section (100b) of the holding device (100).

9. Clamping device according to any of claims 6 to 8, characterized in that the holding device (100) has a control element (106), in particular fluidic, for the swivelling of its sections (100a, 100b) relative to one another.

10. Clamping device according to any of claims 6 to 9, characterized in that a locking device (108), preferably with fluidic control and which locks one of the two sections (100a, 100b) of the holding device (100) in the closed position, is provided.

11. Clamping device according to any of the preceding claims, characterized in that the mating connection element (76) is capable of movement by fluidic means.

12. Clamping device according to any of the preceding claims, characterized in that the two shaped clamping jaws (26) are mounted on slides (21, 22) capable of fluidic movement towards one another on the body (11, 104), and are capable of being coupled and/or locked to the slides (21, 22), in particular by fluidic means.

13. Clamping device according to claim 12, characterized in that various shaped clamping jaws (26), capable of being fixed alternately to the slides (21, 22), are provided.

14. Clamping device according to any of the preceding claims, characterized in that one or more fluidic locking brakes (81) is provided for the body (11, 104), preferably in the form of a jaw brake on the outer periphery of the body (11, 104).

15. Clamping device according to any of the preceding claims, characterized in that the holding device (10, 100) has a drive unit for movement on a guide element (95, 96) axially and/or horizontally at right-angles to the axial direction.

16. Clamping device according to any of the preceding claims, characterized in that the valve means (70) for fixing the rams (33) in the locked state are in the form of fluid-actuable shut-off valves, while preferably non-return valves are provided to maintain the ram position after uncoupling of the mating connection element (76).

17. Clamping device according to any of the preceding claims, characterized in that each shaped clamping jaw (26) has a clamping belt (72) covering the rams (33), against which it is held in particular by spring pressure.

## Revendications

1. Dispositif de serrage pour le serrage périphérique de pièces de contour périphérique quelconque, comportant deux mâchoires de serrage façonnées (26) disposées en vis-à-vis sur un corps de base (11, 104), dont les surfaces de serrage (32) sont constituées chacune par un grand nombre de poussoirs (33) pouvant coulisser sous l'action d'un fluide, indépendamment les uns des autres contre la pièce (71) acérée et pouvant être bloqués dans la position de serrage, caractérisé en ce que le corps de base (11, 104) est monté dans un dispositif de maintien (10, 100) de manière à pouvoir tourner autour d'un axe perpendiculaire à la direction de serrage et présente un raccord (75) pour la commande par fluide en particulier hydraulique, de l'entraînement par fluide d'au moins les poussoirs (33) et en ce qu'un contre-raccord (76), relié à des conduites de fluide, peut coulisser vers le raccord (75) et, à l'état non déplacé du corps de base (11, 104), il peut être accouplé à celui-ci dans une position angulaire déterminée, le corps de base comportant des moyens à soupapes (70) pour la fixation des positions des poussoirs (33) à l'état serré, après désaccouplement du contre-raccord (76).

2. Dispositif de serrage selon la revendication 1, caractérisé en ce que le corps de base (11, 104) est du genre d'un disque circulaire et est supporté périphériquement, les paliers périphériques du corps de base (11, 104) contenant de préférence un grand nombre de rouleaux de palier (12).

3. Dispositif de serrage selon la revendication 1 ou 2, caractérisé en ce qu'un moteur d'entraînement (16) est prévu pour la rotation du corps de base (11, 104).

4. Dispositif de serrage selon la revendication 3, caractérisé en ce que le moteur d'entraînement fixé au dispositif de maintien (10, 100) s'engage, par au moins une roue dentée d'entraînement (18, 19), dans une couronne dentée (20) sur le corps de base (11, 104), qui est disposée sur sa zone périphérique, de préférence deux roues dentées d'entraînement (18, 19), qui s'engagent dans la couronne dentée (20) étant prévues, dont la distance correspond au moins à la largeur de l'évidement (14).

5. Dispositif de serrage selon l'une des revendications précédentes, caractérisé en ce que le corps de base (11) présente un évidement (14) continu, s'étendant latéralement jusqu'au pourtour extérieur, à partir d'une ouverture de serrage (13) contenue axialement, limitée latéralement essentiellement par des deux mâchoires de serrage façonnées (26), évidement qui s'étend à travers le dispositif de maintien (10).

6. Dispositif de serrage selon l'une des revendications 1 à 4, caractérisé en ce que le corps de base (104) et le dispositif de maintien (100) sont réalisés chacun en deux parties, les deux parties (respectivement 104a, 104b et 100a, 100b) pouvant pivoter en s'écartant l'une de l'autre pour introduire et extraire la pièce à serrer et les deux parties (104a, 104b) du corps de base (104) formant en particulier ensemble un disque circulaire fermé.

7. Dispositif de serrage selon la revendication 6, caractérisé en ce que le disque circulaire est pourvu d'une couronne tournante (105) réalisée en particulier en tant que bague de palier, qui est également formée de deux parties.

8. Dispositif de serrage selon la revendication 6 ou 7, caractérisé en ce que le dispositif de maintien (100) est constitué d'une première partie (100a) guidée sur un dispositif de guidage (95, 96) et d'une deuxième partie (100b) reliée à la première partie (100a) de manière à pouvoir pivoter, par l'intermédiaire d'une articulation de pivotement (101), de telle sorte que lors du pivotement une première partie (104a) du corps de base (104) reste dans la première partie (100a) du dispositif de maintien (100) et une deuxième partie (104b) du corps de base (104) pivote en même temps dans la deuxième partie (100b) du dispositif de maintien (100).

9. Dispositif de serrage selon l'une des revendications 6 à 8, caractérisé en ce que le dispositif de maintien (100) comporte un organe de réglage (106) en particulier fluidique, pour le pivotement de ses parties (100a, 100b) l'une par rapport à l'autre.

10. Dispositif de serrage selon l'une des revendications 6 à 9, caractérisé en ce qu'il est prévu un dispositif de verrouillage (108) commandé de préférence par fluide, verrouillant les deux parties (100a, 100b) du dispositif de maintien (100) à l'état fermé.

11. Dispositif de serrage selon l'une des revendications précédentes, caractérisé en ce que le contre-raccord (7, 6) est réalisé de manière à pouvoir coulisser au moyen d'un fluide.

12. Dispositif de serrage selon l'une des revendications précédentes, caractérisé en ce que les deux mâchoires de serrage façonnées (26) sont disposées sur des chariots (21, 22) pouvant coulisser au moyen d'un fluide l'un par rapport à l'autre sur le corps de base (11, 104) et peuvent être accouplées/ou verrouillées sur les chariots (21, 22) notamment au moyen d'un fluide.

13. Dispositif de serrage selon la revendication 12, caractérisé en ce que sont prévues différentes mâchoires de serrage façonnées (26) pouvant être fixées alternativement sur les chariots (21, 22).

14. Dispositif de serrage selon l'une des revendications précédentes, caractérisé en ce qu'il est prévu au moins un frein de blocage (81) fluidique pour le corps de base (11, 104), qui est réalisé de préférence en tant que [rein à mâchoire sur le pourtour extérieur du corps de base (11, 104).

15. Dispositif de serrage selon l'une des revendications précédentes, caractérisé en ce que le dispositif de maintien (10, 100) comporte un dispositif d'entraînement pour la translation axiale et/ou horizontale transversalement à la direction axiale, sur un dispositif de guidage (95, 96).

16. Dispositif de serrage selon l'une des revendications précédentes, caractérisé en ce que les moyens à soupapes (70) pour la fixation des poussoirs (33) à l'état bloqué, sont réalisés en tant que soupapes d'arrêt actionnables au moyen d'un fluide, des clapets de non-retour étant prévus de préférence pour maintenir la position des poussoirs après le désaccouplement du contre-raccord (76).

17. Dispositif de serrage selon l'une des revendications précédentes, caractérisé en ce que chaque mâchoire de serrage façonnée (26) présente une bande de serrage (72) recouvrant les poussoirs (33), s'appliquant contre les poussoirs (33), en particulier sous l'effet de la force d'un ressort.
